# EUROPÄISCHE PATENTSCHRIFT

(11) **EP 4 281 838 B1**
(45) Veröffentlichungstag und Bekanntmachung des Hinweises auf die Patenterteilung: **21.05.2025**
(21) Anmeldenummer: 22701542.7
(22) Anmeldetag: 12.01.2022
(51) Int. Cl.: G05D 1/00, G01C 21/00

(54) **PLANEN EINES PFADS EINES FAHRERLOSEN MOBILEN ROBOTERS**
PLANNING A PATH OF A DRIVERLESS MOBILE ROBOT
PLANIFICATION DE TRAJET D'UN ROBOT MOBILE SANS CONDUCTEUR

(30) Priorität: 22.01.2021 DE 102021200600
(43) Veröffentlichungstag der Anmeldung: 29.11.2023
(73) Patentinhaber: KUKA Deutschland GmbH, 86165 Augsburg (DE)
(72) Erfinder: JOHO, Dominik, 86152 Augsburg (DE); KUHNER, Andreas, 86153 Augsburg (DE)
(74) Vertreter: Schlotter, Alexander Carolus Paul
(86) Internationale Anmeldenummer: PCT/EP2022/050501
(87) Internationale Veröffentlichungsnummer: WO 2022/157044

(56) Entgegenhaltungen:
- US-A1- 2002 105 296
- US-A1- 2017 247 029

## Beschreibung

Die vorliegende Erfindung betrifft ein Verfahren zum Planen, insbesondere Abfahren, eines Pfads eines fahrerlosen mobilen Roboters sowie ein System bzw. Computerprogrammprodukt zur Durchführung des Verfahrens.

Fahrerlose mobile Roboter sollen häufig Posen an- bzw. Pfad(segment)e abfahren, die in verschiedenen Bezugssystemen vorgegeben sind.

Ein Beispiel ist ein umgebungsbezogenes Bezugssystem bzw. eine Karte der Umgebung ("Umgebungskarte"), in dem bzw. der der Roboter navigiert und ein Objekt anfahren soll. Ist er ausreichend nahe bei dem Objekt, wird in ein objektbezogenes Bezugssystem umgeschaltet und in diesem weiternavigiert und das Objekt angefahren.

Hierbei wird bisher zunächst in dem umgebungsbezogenen Bezugssystem ein Pfad geplant, anschließend in dem objektbezogenen Bezugssystem. Nachteilig muss der Roboter dabei anhalten, wenn von dem einen auf den anderen Pfad bzw. von dem einen in das andere Bezugssystem gewechselt wird.

Ein anderes Beispiel sind mehrere umgebungsbezogene Bezugssysteme bzw. Umgebungskarten, in die eine Gesamtumgebung aufgeteilt ist, beispielsweise aus Speicherplatzgründen. Auch hier kann bislang kein kontinuierlicher Pfad über zwei oder mehr Bezugssysteme geplant werden.

Die US 2017/247029 A1 betrifft eine Fahrtsteuerungsvorrichtung, die umfasst: eine Transformationseinheit, die dazu konfiguriert ist, die Fahrspur und das Objekt auf ein Fahrspurkoordinatensystem, in dem eine Mittellinie der Fahrspur eine erste Koordinatenachse und eine Achse orthogonal zur ersten Koordinatenachse eine zweite Koordinatenachse ist, durch Ausführen einer Koordinatentransformation basierend auf der Form der Fahrspur und der Position des Objekts in einem ebenen Koordinatensystem zu projizieren; eine Bereichsberechnungseinheit, die dazu konfiguriert ist, einen befahrbaren Bereich zu berechnen, in dem das Fahrzeug im Fahrspurkoordinatensystem fahren kann; eine Fahrttrajektorien-Erzeugungseinheit, die dazu konfiguriert ist, eine inverse Transformation der Koordinatentransformation durch die Transformationseinheit basierend auf dem befahrbaren Bereich durchzuführen und eine Fahrttrajektorie des Fahrzeugs im ebenen Koordinatensystem zu erzeugen; und eine Steuereinheit, die dazu konfiguriert ist, eine Lenksteuerung am Fahrzeug durchzuführen.

Nach der US 2002/105296 A1 wird die aktuelle Position eines Werkstücks sequentiell in einem Förderkoordinatensystem aktualisiert, und der Pfad eines Roboters zum Folgen des Werkstücks wird durch Transformieren der Position des Werkstücks vom Förderkoordinatensystem in ein Roboterkoordinatensystem gebildet.

Eine Aufgabe einer Ausführung der vorliegenden Erfindung ist es, den Betrieb eines fahrerlosen mobilen Roboters, insbesondere dessen Pfadplanung, zu verbessern.

Diese Aufgabe wird durch ein Verfahren mit den Merkmalen des Anspruchs 1 bzw. 11 gelöst. Ansprüche 13, 14 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung umfasst ein Verfahren zum Planen eines Pfads eines fahrerlosen mobilen Roboters zum Anfahren einer zweiten Pose, die in einem zweiten Bezugssystem vorgegeben ist, aus einer ersten Pose, die in einem ersten Bezugssystem vorgegeben ist, den, in einer Ausführung ein- oder mehrfach wiederholten, Schritt:
Transformieren der zweiten Pose in ein gemeinsames Bezugssystem, in dem auch die erste Pose beschrieben bzw. angegeben ist; und/oder
Transformieren der ersten Pose in ein bzw. das gemeinsame(s) Bezugssystem, in dem auch die zweite Pose beschrieben bzw. angegeben ist;
   auf.

In einer Ausführung weist der mobile Roboter eine mobile Basis bzw. Plattform, in einer Weiterbildung ein, vorzugsweise lenkbares, Fahrwerk auf. Der fahrerlose mobile Roboter ist in einer Ausführung ein sogenanntes AGV ("Automated Guided Vehicle"). Hierfür ist die vorliegende Erfindung aufgrund der Einsatzbedingungen von AGVs besonders geeignet.

Eine Pose im Sinne der vorliegenden Erfindung umfasst in einer Ausführung eine, insbesondere ein-, zwei- oder dreidimensionale, Position und/oder eine, insbesondere ein-, zwei- oder dreidimensionale, Orientierung, besonders bevorzugt eine zweidimensionale Position und eindimensionale Orientierung. In einer Ausführung umfasst eine Pose im Sinne der vorliegenden Erfindung eine, insbesondere ein-, drei- oder besonders bevorzugt zweidimensionale, Position und/oder eine, insbesondere zwei-, drei- oder besonders bevorzugt eindimensionale, Orientierung, einer bzw. der mobilen Basis bzw. Plattform, in einer Ausführung eines bzw. des Fahrwerks, des mobilen Roboters. In einer Ausführung ist die erste Pose eine Pose des mobilen Roboters, in einer Weiterbildung einer bzw. der mobilen Basis bzw. Plattform, in einer Ausführung eines bzw. des Fahrwerks, des mobilen Roboters, und/oder die zweite Pose eine Pose des mobilen Roboters, in einer Weiterbildung einer bzw. der mobilen Basis bzw. Plattform, in einer Ausführung eines bzw. des Fahrwerks, des mobilen Roboters. In einer Ausführung überführt die Überführungsbahn den mobilen Roboter, in einer Weiterbildung eine bzw. die mobile Basis bzw. Plattform, in einer Ausführung ein bzw. das Fahrwerk, des mobilen Roboters, von der ersten in die zweite Pose.

Das gemeinsame Bezugssystem kann insbesondere das erste Bezugssystem sein. Dann wird in einer Ausführung die zweite Pose in das gemeinsame = erste Bezugssystem transformiert, in dem die erste Pose vorgegeben ist.

Hierdurch kann in einer Ausführung eine besonders effiziente Pfadplanung realisiert werden.

In einer anderen Ausführung ist das gemeinsame Bezugssystem das zweite Bezugssystem. Dann wird in einer Ausführung die erste Pose in das gemeinsame = zweite Bezugssystem transformiert, in dem die zweite Pose vorgegeben ist.

Hierdurch kann in einer Ausführung eine besonders präzise Pfadplanung realisiert werden.

Gleichermaßen kann das gemeinsame Bezugssystem ein von dem ersten und zweiten Bezugssystem verschiedenes Bezugssystem sein. Dann werden in einer Ausführung die erste und zweite Pose in dieses gemeinsame Bezugssystem transformiert, so dass sie in diesem beschrieben sind.

Hierdurch kann in einer Ausführung eine besonders variable Pfadplanung realisiert werden.

Nach einer Ausführung der vorliegenden Erfindung umfasst das Verfahren den, in einer Ausführung ein- oder mehrfach wiederholten, Schritt:
Planen einer Überführungsbahn von der ersten Pose in die zweite Pose in dem gemeinsamen Bezugssystem auf Basis der in diesem gemeinsamen Bezugssystem beschriebenen ersten und zweiten Pose.

Indem eine von der ersten und zweiten Pose in das andere Bezugssystem, in dem die andere von der ersten und zweiten Pose vorgegeben ist, oder die erste und zweite Pose in ein gemeinsames Bezugssystem transformiert und somit die erste und zweite Pose in dem gemeinsamen Bezugssystem beschrieben sind, kann in einer Ausführung vorteilhaft eine Überführungsbahn geplant und in einer Weiterbildung abgefahren werden, in einer Ausführung ohne Anhalten des Roboters bei einem Wechsel von dem einen in das andere Bezugssystem.

In einer Ausführung ist die erste Pose auf einem ersten Pfadsegment, in einer Weiterbildung durch ein erstes Pfadsegment, in dem ersten Bezugssystem vorgegeben bzw., gegebenenfalls nur, das erste Pfadsegment (und dadurch implizit eine bzw. die erste Pose) in dem ersten Bezugssystem vorgegeben, und die Überführungsbahn wird auf Basis der in dem gemeinsamen Bezugssystem beschriebenen ersten Pose geplant, indem sie auf Basis des in dem gemeinsamen Bezugssystem beschriebenen, in einer Ausführung in dieses transformierten, ersten Pfadsegments (und dadurch implizit auf Basis einer bzw. der ersten Pose) geplant wird.

Zusätzlich oder alternativ ist in einer Ausführung die zweite Pose auf einem zweiten Pfadsegment, in einer Weiterbildung durch ein zweites Pfadsegment, in dem zweiten Bezugssystem vorgegeben bzw., gegebenenfalls nur, das zweite Pfadsegment (und dadurch implizit eine bzw. die zweite Pose) in dem zweiten Bezugssystem vorgegeben, und die Überführungsbahn wird auf Basis der in dem gemeinsamen Bezugssystem beschriebenen zweiten Pose geplant, indem sie auf Basis des in dem gemeinsamen Bezugssystem beschriebenen, in einer Ausführung in dieses transformierten, zweiten Pfadsegments (und dadurch implizit auf Basis einer bzw. der zweiten Pose) geplant wird.

Entsprechend kann ein Pfad bzw. das Planen eines Pfads des fahrerlosen mobilen Roboters zum Anfahren einer zweiten Pose, die in einem zweiten Bezugssystem vorgegeben ist, aus einer ersten Pose, die in einem ersten Bezugssystem vorgegeben ist, ein Pfad bzw. das Planen eines Pfads zum wenigstens teilweisen Abfahren des ersten Pfadsegments (und damit aus einer (gegebenenfalls nur implizit vorgegebenen) ersten Pose auf dem ersten Pfadsegment) und, insbesondere anschließenden, wenigstens teilweisen Abfahren des zweiten Pfadsegments (und damit Anfahren einer (gegebenenfalls nur implizit vorgegebenen) zweiten Pose auf dem zweiten Pfadsegment) umfassen, insbesondere sein. Eine Überführungsbahn bzw. ein Planen einer Überführungsbahn von der ersten Pose in die zweite Pose in dem gemeinsamen Bezugssystem auf Basis der in diesem gemeinsamen Bezugssystem beschriebenen ersten und zweiten Pose kann entsprechend eine Überführungsbahn bzw. ein Planen einer Überführungsbahn von dem ersten Pfadsegment (und damit von einer (gegebenenfalls nur implizit vorgegebenen) ersten Pose auf dem ersten Pfadsegment) auf das zweite Pfadsegment (und damit in eine (gegebenenfalls nur implizit vorgegebene) zweite Pose auf dem zweiten Pfadsegment) auf Basis des in diesem gemeinsamen Bezugssystem beschriebenen ersten und zweiten Pfadsegments (und damit der (gegebenenfalls nur implizit) in dem gemeinsamen Bezugssystem beschriebenen ersten und zweiten Pose) umfassen, insbesondere sein.

In einer Ausführung wird die zweite Pose in das gemeinsame Bezugssystem transformiert, indem das zweite Pfadsegment in das gemeinsame Bezugssystem transformiert wird. Zusätzlich oder alternativ wird in einer Ausführung die erste Pose in das gemeinsame Bezugssystem transformiert, indem das erste Pfadsegment in das gemeinsame Bezugssystem transformiert wird.

Durch die Verwendung von Pfadsegmenten kann in einer Ausführung das Planen und/oder Betreiben verbessert, insbesondere seine Effizienz und/oder Präzision vergrößert, werden. In einer Ausführung ist das erste Pfadsegment und/oder das zweite Pfadsegment ein geradliniges Pfadsegment. Dadurch kann in einer Ausführung das Planen und/oder Betreiben weiter verbessert, insbesondere seine Effizienz und/oder Präzision weiter vergrößert, werden.

In einer Ausführung überführt die Überführungsbahn (den Roboter) stetig, in einer Ausführung (auf einem) stetig differenzierbar(en Pfad), von dem ersten auf das zweite Pfadsegment, wobei sie vor einem Pfadende des ersten Pfadsegments von diesem abweichen und nach einem Pfadanfang bzw. vor einem Pfadende des zweite Pfadsegments auf dieses aufsetzen kann.

Dadurch kann in einer Ausführung der Betrieb des Roboters verbessert, insbesondere eine Belastung und/oder Zykluszeit reduziert werden.

In einer Ausführung wird bei wenigstens einem, insbesondere anfänglichen, Durchlauf bzw. wenigstens einem der Schritte des Verfahrens die Transformation des einen von der ersten und zweiten Pfadsegment in das gemeinsame Bezugssystem auf Basis einer vorgegeben Relation, in einer Ausführung einer Identität, einer Pose, in einer Ausführung einer Endpose, auf dem ersten Pfadsegment zu einer Pose, in einer Ausführung einer Anfangspose, relativ zu, in einer Ausführung auf, dem zweiten Pfadsegment ermittelt.

Indem, insbesondere in einem ersten Durchlauf von Transformieren des einen von der ersten und zweiten Pfadsegment und Planen einer Überführungsbahn, die(se) Transformation auf Basis der vorgegeben Relation, insbesondere mit der Maßgabe, dass die Endpose auf dem ersten Pfadsegment gleich der Anfangspose auf dem zweiten Pfadsegment sein soll, ermittelt wird, kann in einer Ausführung vorteilhaft auch ohne Initialisierung bzw. Kalibrierung des zweiten Bezugssystems die Überführungsbahn, insbesondere anfänglich, geplant werden.

Zweckmäßigerweise ist eine Pose, die bei einer Initialisierung, insbesondere Kalibrierung, des zweiten Bezugssystems verwendet wird, eine Anfangspose auf dem zweiten Pfadsegment. Gleichermaßen kann jedoch auch eine andere Pose relativ zu dem zweiten Pfadsegment verwendet werden, insbesondere eine Pose, die bei einer Initialisierung, insbesondere Kalibrierung, des zweiten Bezugssystems verwendet wird. Entsprechend wird in einer Ausführung die Transformation mit der Maßgabe, dass die Endpose auf dem ersten Pfadsegment gleich der Pose, die bei einer Initialisierung, insbesondere Kalibrierung, des zweiten Bezugssystems verwendet wird, sein soll, ermittelt.

Zusätzlich oder alternativ wird in einer Ausführung bei wenigstens einem, insbesondere weiteren bzw. nachfolgenden, Durchlauf bzw. wenigstens einem der Schritte des Verfahrens die Transformation der einen von der ersten und zweiten Pose, insbesondere des einen von der ersten und zweiten Pfadsegment, in das gemeinsame Bezugssystem auf Basis einer vorgegeben Relation, insbesondere Identität, einer Pose, insbesondere Istpose, des Roboters, die in dem Bezugssystem beschrieben ist, in dem diese einen von der ersten und zweiten Pose bzw. dieses eine von der ersten und zweiten Pfadsegment vorgegeben ist, zu einer Pose, insbesondere Istpose, des Roboters ermittelt, die in dem gemeinsamen Bezugssystem beschrieben ist.

Indem, insbesondere in einem oder mehreren nachfolgenden Durchläufen von Transformieren und Planen einer Überführungsbahn, die Transformation (jeweils) auf Basis der vorgegeben Relation, insbesondere mit der Maßgabe, dass die Istpose des Roboters die in dem Bezugssystem beschrieben ist, aus dem transformiert wird, gleich der Istpose des Roboters in dem gemeinsamen Bezugssystem sein soll, ermittelt wird, kann in einer Ausführung vorteilhaft die Präzision erhöht, insbesondere die Transformation und/oder Überführungsbahn aktualisiert werden.

Wie vorstehend erläutert, kann die Transformation statt auf Basis der Istposen insbesondere auch auf Basis einer Endpose auf dem ersten Pfadsegment und einer Pose, die bei einer Initialisierung, insbesondere Kalibrierung, des zweiten Bezugssystems verwendet wird, ermittelt werden.

Zusätzlich oder alternativ wird in einer Ausführung bei wenigstens einem, insbesondere weiteren bzw. nachfolgenden, Durchlauf bzw. wenigstens einem der Schritte des Verfahrens die Transformation der einen von der ersten und zweiten Pose, insbesondere des einen von der ersten und zweiten Pfadsegment, in das gemeinsame Bezugssystem auf Basis einer vorgegeben Relation, insbesondere Identität, einer Pose, insbesondere Istpose, des Roboters, die in dem Bezugssystem beschrieben ist, in dem diese einen von der ersten und zweiten Pose bzw. dieses eine von der ersten und zweiten Pfadsegment vorgegeben ist, zu einer Pose, insbesondere Istpose, des Roboters ermittelt, die in dem gemeinsamen Bezugssystem beschrieben ist.

In einer Ausführung ist das erste Bezugssystem ein umgebungsbezogenes Bezugssystem, in dem bzw. mittels dessen der Roboter in einer Weiterbildung wenigstens zeitweise navigiert. In einer Ausführung lokalisiert sich der Roboter wenigstens zeitweise in dem ersten, insbesondere umgebungsbezogenen, Bezugssystem. In einer Ausführung ist, insbesondere wird, das erste Bezugssystem relativ zu einer Umgebung, insbesondere mehreren Orientierungspunkten, kalibriert, beispielsweise mittels SLAM oder dergleichen.

Zusätzlich oder alternativ ist das zweite Bezugssystem in einer Ausführung ein objektbezogenes Bezugssystem, das in einer Weiterbildung relativ zu einem Objekt vorgegeben, insbesondere kalibriert, ist, insbesondere wird, das der Roboter in einer Ausführung anfahren soll. In einer Ausführung lokalisiert sich der Roboter wenigstens zeitweise in dem zweiten, insbesondere objektbezogenen, Bezugssystem.

In einer alternativen Ausführung ist das zweite Bezugssystem ein anderes umgebungsbezogenes, insbesondere an das erste Bezugssystem angrenzende oder dieses wenigstens teilweise überlappende, Bezugssystem, wobei der Roboter in einer Weiterbildung in dem bzw. mittels des zweiten Bezugssystem(s) wenigstens zeitweise navigiert. In einer Ausführung lokalisiert sich der Roboter wenigstens zeitweise in diesem zweiten, insbesondere ebenfalls umgebungsbezogenen, Bezugssystem.

In einer Ausführung navigiert der Roboter, insbesondere in einer ersten Phase, mithilfe des ersten Bezugssystems, und, insbesondere in einer zweiten Phase, mithilfe des zweiten Bezugssystems, wechselt in einer Ausführung von dem ersten zu dem zweiten Bezugssystem, in einer Weiterbildung ohne anzuhalten. In einer Ausführung fährt er in der zweiten Phase die in dem zweiten Bezugssystem vorgegebene zweite Pose an bzw. das in dem zweiten Bezugssystem vorgegebene zweite Pfadsegment wenigstens teilweise ab, wobei er vorzugsweise die bzw. das in dem zweiten Bezugssystem vorgegebene Pose bzw. Pfadsegment, insbesondere direkt bzw. in dem zweiten Bezugssystem, verwendet. Zusätzlich oder alternativ fährt der Roboter in einer Ausführung in der ersten Phase das in dem ersten Bezugssystem vorgegebene erste Pfadsegment wenigstens teilweise ab, wobei er vorzugsweise das in dem ersten Bezugssystem vorgegebene Pfadsegment, insbesondere direkt bzw. in dem ersten Bezugssystem, verwendet.

Ein Bezugssystem im Sinne der vorliegenden Erfindung umfasst in einer Ausführung eine Karte, kann insbesondere eine solche sein.

In einer Ausführung weist das System, insbesondere der Roboter, einen ersten Lokalisierer auf, der die Pose des Roboters relativ zu bzw. in dem ersten Bezugssystem ermittelt, in einer Ausführung mehrfach aktualisiert, in einer Weiterbildung bereits vor und/oder während des Planens und/oder Abfahrens des Pfads. Zusätzlich oder alternativ weist das System, insbesondere der Roboter, in einer Ausführung einen zweiten Lokalisierer auf, der die Pose des Roboters relativ zu bzw. in dem zweiten Bezugssystem ermittelt, in einer Ausführung mehrfach aktualisiert, in einer Weiterbildung erst während des Planens und/oder Abfahrens des Pfads. Entsprechend ist das erste Bezugssystem in einer Ausführung ein Bezugssystem, in bzw. relativ zu dem der bzw. ein erster Lokalisierer die Pose des Roboters, insbesondere relativ zu einer Umgebung, ermittelt, in einer Ausführung mehrfach aktualisiert, in einer Weiterbildung bereits vor und/oder während des Planens und/oder Abfahrens des Pfads, und/oder das zweite Bezugssystem ein Bezugssystem, in bzw. relativ zu dem der bzw. ein zweiter Lokalisierer die Pose des Roboters, insbesondere relativ zu einem Objekt, ermittelt, in einer Ausführung mehrfach aktualisiert, in einer Weiterbildung erst während des Planens und/oder Abfahrens des Pfads.

Nach einer Ausführung der vorliegenden Erfindung umfasst ein Verfahren zum Betreiben des Roboters die, in einer Ausführung ein- oder mehrfach wiederholten, Schritte:
Planen eines Pfads nach einem hier beschriebenen Verfahren; und
Abfahren des Pfads mit dem Roboter, in einer Ausführung mithilfe des ersten Bezugssystems, des zweiten Bezugssystems und/oder des gemeinsamen Bezugssystems, in einer Weiterbildung unter Umschalten von dem ersten in das zweite Bezugssystem.

In einer Ausführung wird die Überführungsbahn, in einer Weiterbildung die Transformation in das gemeinsame Bezugssystem, während des Abfahrens ein- oder mehrfach aktualisiert.

Dadurch kann in einer Ausführung der Roboter vorteilhaft auf Basis von in zwei Bezugssystemen vorgegebenen Posen bzw. Pfadsegmenten verfahren, vorzugsweise ohne bei einem Wechsel anzuhalten.

Nach einer Ausführung der vorliegenden Erfindung ist ein System, insbesondere hard- und/oder software-, insbesondere programmtechnisch, zur Durchführung eines hier beschriebenen Verfahrens eingerichtet und/oder weist auf:
Mittel zum, insbesondere mehrfachen, Transformieren der einen von der ersten und zweiten Pose in ein gemeinsames Bezugssystem, in dem auch die andere von der ersten und zweiten Pose beschrieben ist; und
Mittel zum, insbesondere mehrfachen, Planen einer Überführungsbahn von der ersten Pose in die zweite Pose in diesem gemeinsamen Bezugssystem auf Basis der in diesem beschriebenen ersten und zweiten Pose.

In einer Ausführung weist das System bzw. seine Mittel auf:
Mittel zum Abfahren des Pfads mit dem Roboter, insbesondere mithilfe des ersten, zweiten und/oder gemeinsamen Bezugssystems; und/oder
Mittel zum Planen der Überführungsbahn auf Basis der in dem gemeinsamen Bezugssystem beschriebenen ersten Pose, indem die Überführungsbahn auf Basis des in dem gemeinsamen Bezugssystem beschriebenen, insbesondere in dieses transformierten, ersten Pfadsegments geplant wird; und/oder
Mittel zum Planen der Überführungsbahn auf Basis der in dem gemeinsamen Bezugssystem beschriebenen zweiten Pose, indem die Überführungsbahn auf Basis des in dem gemeinsamen Bezugssystem beschriebenen, insbesondere in dieses transformierten, zweiten Pfadsegments geplant wird; und/oder
Mittel zum Transformieren der ersten Pose in das gemeinsame Bezugssystem, indem das erste Pfadsegment in das gemeinsame Bezugssystem transformiert wird, und/oder zum Transformieren der zweiten Pose in das gemeinsame Bezugssystem, indem das zweite Pfadsegment in das gemeinsame Bezugssystem transformiert wird; und/oder
Mittel zum Ermitteln der Transformation des einen von der ersten und zweiten Pfadsegment in das gemeinsame Bezugssystem auf Basis einer vorgegeben Relation, insbesondere Identität, einer Pose, insbesondere Endpose, auf dem ersten Pfadsegment zu einer Pose, insbesondere Anfangspose, relativ zu, insbesondere auf, dem zweiten Pfadsegment; und/oder
Mittel zum Ermitteln der Transformation der einen von der ersten und zweiten Pose, insbesondere des einen von der ersten und zweiten Pfadsegment, in das gemeinsame Bezugssystem auf Basis einer vorgegeben Relation, insbesondere Identität, einer Pose, insbesondere Istpose, des Roboters, die in dem Bezugssystem beschrieben ist, in dem diese einen von der ersten und zweiten Pose bzw. dieses eine von der ersten und zweiten Pfadsegment vorgegeben ist, zu einer Pose, insbesondere Istpose, des Roboters, die in dem gemeinsamen Bezugssystem beschrieben ist; und/oder
Mittel zum Aktualisieren der Überführungsbahn und/oder Transformation in das gemeinsame Bezugssystem während des Abfahrens.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den Pfad planen bzw. den Roboter betreiben, insbesondere steuern, kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. seine Mittel.

In einer Ausführung weist das System den Roboter auf.

Weitere Vorteile und Merkmale ergeben sich aus den Unteransprüchen und den Ausführungsbeispielen. Hierzu zeigt, teilweise schematisiert:
- Fig. 1:: einen fahrerlosen mobilen Roboter und ein erstes Bezugssystem beim Planen eines Pfads des Roboters nach einer Ausführung der vorliegenden Erfindung;
- Fig. 2:: ein zweites Bezugssystem beim Planen des Pfads;
- Fig. 3:: eine anfänglich geplante Überführungsbahn;
- Fig. 4:: das erste Bezugssystem beim weiteren Planen des Pfads während des Abfahrens des Pfads mit dem Roboter;
- Fig. 5:: das zweite Bezugssystem beim weiteren Planen des Pfads während des Abfahrens des Pfads mit dem Roboter;
- Fig. 6:: eine beim Abfahren aktualisierte Überführungsbahn; und
- Fig. 7:: ein Verfahren zum Planen des Pfads nach einer Ausführung der vorliegenden Erfindung.

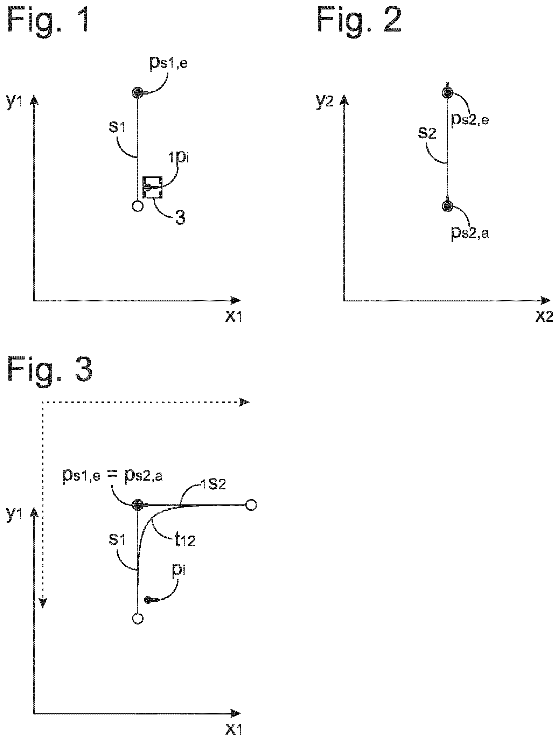

Fig. 1 zeigt ein AGV 3 und ein erstes, umgebungsbezogenes Bezugssystem, angedeutet durch x₁, y₁, in dem das AGV 3 zunächst navigiert, und in dem ein erstes Pfadsegment s₁ mit einer Endpose p_{s1, e} (angedeutet durch den ausgefüllten Kreis mit Orientierungsbalken) vorgegeben ist.

In einem zweiten Bezugssystem, das in Fig. 2 durch x₂, y₂ angedeutet ist, ist ein zweites Pfadsegment s₂ mit einer Anfangspose p_{s2, a} und einer Endpose p_{s2, e} vorgegeben, die das AGV 3 anfahren soll. Dieses zweite Bezugssystem kann insbesondere ein objektbezogenes oder anderes umgebungsbezogenes, insbesondere an das Bezugssystem x₁, y₁, angrenzende oder dieses wenigstens teilweise überlappende, Bezugssystem sein.

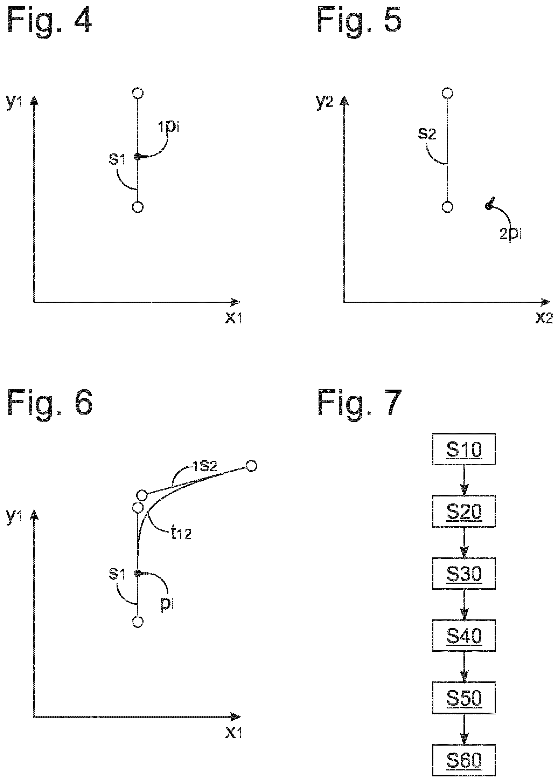

In einem ersten Schritt S10 (vgl. Fig. 7) wird das zweite Pfadsegment s₂ in das erstes Bezugssystem x₁, y₁ transformiert, welches als gemeinsames Bezugssystem verwendet wird. Dadurch werden auch alle, gegebenenfalls nur implizit vorgegebenen, Posen des zweite Pfadsegments s₂ (implizit) in das erstes Bezugssystem x₁, y₁ transformiert.

Dabei wird diese Transformation in das gemeinsame Bezugssystem auf Basis einer Identität der Endpose p_{s1, e} auf dem ersten Pfadsegment s₁ zur Anfangspose p_{s2, a} auf dem zweiten Pfadsegment s₂ ermittelt. Mit anderen Worten wird das zweite Bezugssystem bzw. Pfadsegment so in das gemeinsame bzw. erste Bezugssystem transformiert, dass in diesem die Anfangspose p_{s2, a} zu der Endpose p_{s1, e} identisch ist. Auf diese Weise muss das zweite Bezugssystem zu diesem Zeitpunkt noch nicht, insbesondere durch einen (zweiten) Lokalisierer, initialisiert bzw. kalibriert sein bzw. werden. Anstelle der Anfangspose p_{s2, a} kann auch eine andere Pose relativ zum zweiten Pfadsegement verwendet werden, insbesondere eine Pose, in der das Bezugssystem initialisiert bzw. kalibriert wird.

Dann wird in einem Schritt S20 eine anfängliche Überführungsbahn t₁₂ von dem ersten Pfadsegment s₁ auf das zweite Pfadsegment s₂ in diesem gemeinsamen Bezugssystem auf Basis der nun beide in diesem beschriebenen Pfadsegmente s₁, ₁s₂ geplant (vgl. Fig. 3), die stetig differenzierbar von dem ersten auf das zweite Pfadsegment überführt.

Nun kann das AGV 3 in einem Schritt S30 beginnen, das erste Pfadsegment s₁ abzufahren. Nun wird das zweite Bezugssystem initialisiert.

In einem Schritt S40 wird analog das zweite Pfadsegment s₂ in das erstes Bezugssystem x₁, y₁, transformiert.

Dabei wird diese Transformation in das gemeinsame Bezugssystem nun auf Basis einer Identität der Istpose ₂pᵢ des Roboters in dem zweiten Bezugssystem x₂, y₂ zur Istpose ₁pᵢ des Roboters in dem gemeinsamen bzw. ersten Bezugssystem x₁, y₁ ermittelt. Mit anderen Worten wird das zweite Bezugssystem bzw. Pfadsegment so in das gemeinsame bzw. erste Bezugssystem transformiert, dass in diesem die Istposen ₁pᵢ, ₂pᵢ identisch sind.

Dann wird in einem Schritt S50 die Überführungsbahn t₁₂ aktualisiert (vgl. Fig. 6).

In einem Schritt S60 fährt das AGV 3 den geplanten Pfad weiter ab, wobei die Schritte S40, S50 ein- oder mehrfach wiederholt werden können. Sobald er dabei die Überführungsbahn erreicht, kann diese konstant gehalten und gegebenenfalls zum Navigieren auf das zweite Bezugssystem umgeschaltet werden, ohne dass das AGV 3 dabei anhalten muss.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- p_{s1, e}: Endpose des ersten Pfadsegments
- p_{s2, a}: Anfangspose des zweiten Pfadsegments
- p_{s2, e}: Endpose des zweiten Pfadsegments
- ₁pᵢ: Istpose, beschrieben im ersten Bezugssystem
- ₂pᵢ: Istpose, beschrieben im zweiten Bezugssystem
- s₁: erstes Pfadsegment
- s₂: zweites Pfadsegment, beschrieben im zweiten Bezugssystem
- ₁s₂: zweites Pfadsegment, beschrieben im ersten Bezugssystem
- t₁₂: Überführungsbahn
- x₁, y₁: erstes Bezugssystem
- x₂, y₂: zweites Bezugssystem
- 3: AGV (Roboter)

## Patentansprüche

1. Verfahren zum Planen eines Pfads eines fahrerlosen mobilen Roboters (3) zum Anfahren einer zweiten Pose, die in einem zweiten Bezugssystem vorgegeben ist, aus einer ersten Pose, die in einem ersten Bezugssystem vorgegeben ist, mit den, insbesondere wiederholten, Schritten:
Transformieren (S10, S40) der einen von der ersten und zweiten Pose in ein gemeinsames Bezugssystem, in dem auch die andere von der ersten und zweiten Pose beschrieben ist, und
Planen (S20, S50) einer Überführungsbahn (t₁₂) von der ersten Pose in die zweite Pose in diesem gemeinsamen Bezugssystem auf Basis der in diesem gemeinsamen Bezugssystem beschriebenen ersten und zweiten Pose.

2. Verfahren nach Anspruch 1, **dadurch gekennzeichnet, dass** die erste Pose auf einem ersten Pfadsegment, insbesondere durch ein ersten Pfadsegment, in dem ersten Bezugssystem vorgegeben ist und die Überführungsbahn auf Basis der in dem gemeinsamen Bezugssystem beschriebenen ersten Pose geplant wird, indem die Überführungsbahn auf Basis des in dem gemeinsamen Bezugssystem beschriebenen ersten Pfadsegments geplant wird.

3. Verfahren nach Anspruch 2, **dadurch gekennzeichnet, dass** die erste Pose in das gemeinsame Bezugssystem transformiert wird, indem das erste Pfadsegment in das gemeinsame Bezugssystem transformiert wird, und/oder dass die Überführungsbahn auf Basis der in dem gemeinsamen Bezugssystem beschriebenen ersten Pose geplant wird, indem die Überführungsbahn auf Basis des in das gemeinsame Bezugssystem transformierten ersten Pfadsegments geplant wird.

4. Verfahren nach einem der vorhergehenden Ansprüche, **dadurch gekennzeichnet, dass** die zweite Pose auf einem zweiten Pfadsegment, insbesondere durch ein zweites Pfadsegment, in dem zweiten Bezugssystem vorgegeben ist und die Überführungsbahn auf Basis der in dem gemeinsamen Bezugssystem beschriebenen zweiten Pose geplant wird, indem die Überführungsbahn auf Basis des in dem gemeinsamen Bezugssystem beschriebenen zweiten Pfadsegments geplant wird.

5. Verfahren nach Anspruch 4, **dadurch gekennzeichnet, dass** die zweite Pose in das gemeinsame Bezugssystem transformiert wird, indem das zweite Pfadsegment in das gemeinsame Bezugssystem transformiert wird und/oder dass die Überführungsbahn auf Basis der in dem gemeinsamen Bezugssystem beschriebenen zweiten Pose geplant wird, indem die Überführungsbahn auf Basis des in das gemeinsame Bezugssystem transformierten zweiten Pfadsegments geplant wird.

6. Verfahren nach Anspruch 2 oder 3 und Anspruch 4 oder 5, **dadurch gekennzeichnet, dass** die Überführungsbahn stetig, insbesondere stetig differenzierbar, von dem ersten auf das zweite Pfadsegment überführt.

7. Verfahren nach Anspruch 2 und Anspruch 4, **dadurch gekennzeichnet, dass** eine Transformation des einen von der ersten und zweiten Pfadsegment in das gemeinsame Bezugssystem auf Basis einer vorgegeben Relation, insbesondere Identität, einer Pose, insbesondere Endpose, auf dem ersten Pfadsegment zu einer Pose, insbesondere Anfangspose, relativ zu, insbesondere auf, dem zweiten Pfadsegment ermittelt wird (S10).

8. Verfahren nach einem der vorhergehenden Ansprüche 1, 2 oder 4, **dadurch gekennzeichnet, dass** das gemeinsame Bezugssystem das erste Bezugssystem oder das zweite Bezugssystem ist.

9. Verfahren nach einem der vorhergehenden Ansprüche, **dadurch gekennzeichnet, dass** die Transformation der einen von der ersten und zweiten Pose in das gemeinsame Bezugssystem auf Basis einer vorgegeben Relation, insbesondere Identität, einer Pose, insbesondere Istpose, des Roboters, die in dem Bezugssystem beschrieben ist, in dem diese eine von der ersten und zweiten Pose vorgegeben ist, zu einer Pose, insbesondere Istpose, des Roboters ermittelt wird (S50), die in dem gemeinsamen Bezugssystem beschrieben ist.

10. Verfahren nach einem der vorhergehenden Ansprüche, **dadurch gekennzeichnet, dass** das erste Bezugssystem ein umgebungsbezogenes Bezugssystem und das zweite Bezugssystem ein objektbezogenes oder anderes umgebungsbezogenes, insbesondere an das erste Bezugssystem angrenzende oder dieses wenigstens teilweise überlappende, Bezugssystem ist.

11. Verfahren zum Betreiben eines fahrerlosen mobilen Roboters (3), mit den Schritten:
Planen (S10, S20, S40, S50) eines Pfads zum Anfahren einer zweiten Pose aus einer ersten Pose nach einem Verfahren nach einem der vorhergehenden Ansprüche; und
Abfahren (S30, S60) des Pfads mit dem Roboter, insbesondere mithilfe des ersten, zweiten und/oder gemeinsamen Bezugssystems.

12. Verfahren nach dem vorhergehenden Anspruch, **dadurch gekennzeichnet, dass** die Überführungsbahn und/oder Transformation in das gemeinsame Bezugssystem, insbesondere während des Abfahrens, aktualisiert wird.

13. System zum Planen eines Pfads eines fahrerlosen mobilen Roboters (3), insbesondere zum Betreiben des Roboters, das zur Durchführung eines Verfahrens nach einem der vorhergehenden Ansprüche 1-12 eingerichtet ist und/oder aufweist:
Mittel zum Transformieren der einen von der ersten und zweiten Pose in ein gemeinsames Bezugssystem, in dem auch die andere von der ersten und zweiten Pose beschrieben ist; und
Mittel zum Planen einer Überführungsbahn (t₁₂) von der ersten Pose in die zweite Pose in diesem gemeinsamen Bezugssystem auf Basis der in diesem gemeinsamen Bezugssystem beschriebenen ersten und zweiten Pose;
insbesondere Mittel zum Abfahren des Pfads mit dem Roboter, insbesondere mithilfe des ersten, zweiten und/oder gemeinsamen Bezugssystems.

14. Computerprogrammprodukt mit einem Programmcode, der auf einem von einem Computer lesbaren Medium gespeichert ist, zur Durchführung eines Verfahrens nach einem der vorhergehenden Ansprüche 1-12.

## Claims

1. A method of planning a path of a driverless mobile robot (3) for moving to a second pose, which is specified in a second reference system, from a first pose, which is specified in a first reference system, wherein the method comprises the following steps, in particular the following repeated steps:
transforming (S10, S40) the one of the first and second poses into a common reference system, in which the other of the first and second poses is also described; and
planning (S20, S50) a transition path (t₁₂) from the first pose to the second pose in said common reference system on the basis of the first and second poses described in said common reference system.

2. The method according to claim 1, **characterised in that** the first pose is specified on a first path segment, in particular by a first path segment, in the first reference system, and the transition path is planned on the basis of the first pose described in the common reference system, by the transition path being planned on the basis of the first path segment described in the common reference system.

3. The method according to claim 2, **characterised in that** the first pose is transformed into the common reference system by the first path segment being transformed into the common reference system, and/or **in that** the transition path is planned on the basis of the first pose described in the common reference system by the transition path being planned on the basis of the first path segment transformed into the common reference system.

4. The method according to any one of the preceding claims, **characterised in that** the second pose is specified in the second reference system on a second path segment, in particular by a second path segment, and the transition path is planned on the basis of the second pose described in the common reference system, by the transition path being planned on the basis of the second path segment described in the common reference system.

5. The method according to claim 4, **characterised in that** the second pose is transformed into the common reference system by the second path segment being transformed into the common reference system and/or **in that** the transition path is planned on the basis of the second pose described in the common reference system by the transition path being planned on the basis of the second path segment transformed into the common reference system.

6. The method according to claim 2 or 3 and claim 4 or 5, **characterised in that** the transition path transitions continuously, in particular in such a manner that it can be differentiated continuously, from the first path segment to the second path segment.

7. The method according to claim 2 and claim 4, **characterised in that** a transformation of the one of the first and second path segments into the common reference system is determined (S10) on the basis of a specified relation, in particular an identity, of a pose, in particular of an end pose, on the first path segment, to a pose, in particular an initial pose, in relation to the second path segment, in particular on the second path segment.

8. The method according to any one of the preceding claims 1, 2 or 4, **characterised in that** the common reference system is the first reference system or the second reference system.

9. The method according to any one of the preceding claims, **characterised in that** the transformation of the one of the first and second poses into the common reference system is determined (S50) on the basis of a specified relation, in particular an identity, of a pose, in particular of an actual pose, of the robot, which pose, in particular actual pose, is described in the reference system in which said one of the first and second poses is specified, to a pose, in particular an actual pose, of the robot, which pose, in particular actual pose, is described in the common reference system.

10. The method according to any one of the preceding claims, **characterised in that** the first reference system is an environment-related reference system, and the second reference system is an object-related or other environment-related reference system, in particular an object-related or other environment-related reference system which is adjacent to, or which overlaps at least in part with, the first reference system.

11. A method of operating a driverless mobile robot (3), wherein the method comprises the steps of:
planning (S10, S20, S40, S50) a path for moving from a first pose to a second pose in accordance with a method according to any one of the preceding claims; and
moving (S30, S60) along the path with the robot, in particular with the aid of the first, second and/or common reference system.

12. The method according to the preceding claim, **characterised in that** the transition path and/or the transformation into the common reference system is updated, in particular during the movement along the path.

13. A system for planning a path of a driverless mobile robot (3), in particular for operating the robot, which system is configured to carry out a method according to any one of the preceding claims 1 to 12, and/or which comprises:
means for transforming the one of the first and second poses into a common reference system in which the other of the first and second poses is also described; and
means for planning a transition path (t₁₂) from the first pose to the second pose in said common reference system on the basis of the first and second poses described in this common reference system;
in particular means for moving along the path with the robot, in particular with the aid of the first, second and/or common reference system.

14. A computer program product comprising a program code which is stored on a computer readable medium, for carrying out a method according to any one of the preceding claims 1 to 12.

## Revendications

1. Procédé pour planifier un trajet d'un robot mobile sans conducteur (3) pour atteindre une deuxième pose, qui est prédéfinie dans un deuxième système de référence, à partir d'une première pose, qui est prédéfinie dans un premier système de référence, avec les étapes, notamment répétées, de :
transformation (S10, S40) d'une de la première et deuxième pose en un système de référence commun, dans lequel l'autre est également décrite par la première et deuxième pose ; et
planification (S20, S50) d'une voie de transfert (t₁₂) de la première pose à la deuxième pose dans ce système de référence commun sur la base de la première et deuxième pose décrite dans ce système de référence commun.

2. Procédé selon la revendication 1, **caractérisé en ce que** la première pose est prédéfinie sur un premier segment de trajet, notamment par un premier segment de trajet, dans le premier système de référence et la voie de transfert est planifiée sur la base de la première pose décrite dans le système de référence commun en planifiant la voie de transfert sur la base du premier segment de trajet décrit dans le système de référence commun.

3. Procédé selon la revendication 2, **caractérisé en ce que** la première pose est transformée en système de référence commun en transformant le premier segment de trajet en système de référence commun et/ou que la voie de transfert est planifiée sur la base de la première pose décrite dans le système de référence commun en planifiant la voie de transfert sur la base du premier segment de trajet transformé en système de référence commun.

4. Procédé selon l'une quelconque des revendications précédentes, **caractérisé en ce que** la deuxième pose est prédéfinie sur un deuxième segment de trajet, notamment par un deuxième segment de trajet, dans le deuxième système de référence et la voie de transfert est planifiée sur la base de la deuxième pose décrite dans le système de référence commun en planifiant la voie de transfert sur la base du deuxième segment de trajet décrit dans le système de référence commun.

5. Procédé selon la revendication 4, **caractérisé en ce que** la deuxième pose est transformée en système de référence commun en transformant le deuxième segment de trajet en système de référence commun et/ou que la voie de transfert est planifiée sur la base de la deuxième pose décrite dans le système de référence commun en planifiant la voie de transfert sur la base du deuxième segment de trajet transformé en système de référence commun.

6. Procédé selon la revendication 2 ou 3 et la revendication 4 ou 5, **caractérisé en ce que** la voie de transfert passe en permanence, notamment en permanence de manière différenciable, du premier au deuxième segment de trajet.

7. Procédé selon la revendication 2 et la revendication 4, **caractérisé en ce qu'**une transformation de l'un du premier et deuxième segment de trajet en système de référence commun est déterminée (S10) sur la base d'une relation prédéfinie, notamment identité, d'une pose, notamment pose de fin, sur le premier segment de trajet par rapport à une pose, notamment pose de début, relativement, notamment au deuxième segment de trajet.

8. Procédé selon l'une quelconque des revendications 1, 2 ou 4 précédentes, **caractérisé en ce que** le système de référence commun est le premier système de référence ou le deuxième système de référence.

9. Procédé selon l'une quelconque des revendications précédentes, **caractérisé en ce que** la transformation de l'une de la première et deuxième pose en système de référence commun est déterminée (S50) sur la base d'une relation prédéfinie, notamment identité, d'une pose, notamment pose réelle, du robot qui est décrite dans le système de référence, dans lequel celle-ci est prédéfinie par la première et deuxième pose, par rapport à une pose, notamment pose réelle, du robot, qui est décrite dans le système de référence commun.

10. Procédé selon l'une quelconque des revendications précédentes, **caractérisé en ce que** le premier système de référence est un système de référence lié à l'environnement et le deuxième système de référence est un système de référence lié à un objet ou un autre système de référence lié à l'environnement, notamment adjacent au premier système de référence ou se chevauchant au moins partiellement avec celui-ci.

11. Procédé pour faire fonctionner un robot mobile sans conducteur (3), avec les étapes de :
planification (S10, S20, S40, S50) d'un trajet pour atteindre une deuxième pose à partir d'une première pose selon un procédé selon l'une quelconque des revendications précédentes ; et
parcours (S30, S60) du trajet avec le robot, notamment à l'aide du premier, deuxième système de référence et/ou système de référence commun.

12. Procédé selon la revendication précédente, **caractérisé en ce que** la voie de transfert et/ou transformation en système de référence commun est mise à jour, notamment pendant le parcours.

13. Système pour planifier un trajet d'un robot mobile sans conducteur (3), notamment pour faire fonctionner le robot, qui est configuré pour mettre en œuvre un procédé selon l'une quelconque des revendications 1 à 12 précédentes et/ou présente :
des moyens pour transformer l'une de la première et deuxième pose en un système de référence commun dans lequel l'autre de la première et deuxième pose est également décrite ; et
des moyens pour planifier une voie de transfert (t₁₂) de la première pose à la deuxième pose dans ce système de référence commun sur la base de la première et deuxième pose décrite dans ce système de référence commun ;
notamment des moyens pour parcourir le trajet avec le robot, notamment à l'aide du premier, deuxième système de référence et/ou système de référence commun.

14. Produit-programme d'ordinateur avec un code de programme qui est stocké sur un support lisible par un ordinateur pour mettre en œuvre un procédé selon l'une quelconque des revendications 1 à 12 précédentes.
